# EUROPEAN PATENT SPECIFICATION

(11) **EP 3 093 540 B1**
(45) Date of publication and mention of the grant of the patent: **21.03.2018**
(21) Application number: 15382245.7
(22) Date of filing: 11.05.2015
(51) Int. Cl.: F16K 35/04, F16K 11/078

(54) **INDIRECT-MOVEMENT MIXING CARTRIDGE WITH FLOW-RATE LIMITER**
MISCHPATRONE MIT INDIREKTER BEWEGUNG MIT DURCHFLUSSMENGENBEGRENZER
CARTOUCHE DE MÉLANGE À MOUVEMENT INDIRECT AVEC LIMITEUR DE DÉBIT

(43) Date of publication of application: 16.11.2016
(73) Proprietor: Sedal, S.L., 08740 Sant Andreu De La Barca (ES)
(72) Inventor: GILI MARTÍNEZ, Sergi, 08035 BARCELONA (ES)
(74) Representative: Oficina Ponti, SLP

(56) References cited:
- EP-A1- 2 803 885
- DE-A1- 19 942 547
- DE-U1-202008 004 640
- US-B1- 6 202 693

## Description

### FIELD OF THE INVENTION

The present invention relates to an indirect-movement mixing cartridge for a single-grip mixing faucet with flow-rate limiter. In particular, the indirect-movement mixing cartridge of the invention comprises a flow-rate limiter that, while having a very simple structure, is capable of providing a surmountable limitation for the outflow rate of mixed water. Moreover, the indirect-movement mixing cartridge of the invention makes it possible for the user, when the position at which the flow-rate is limited to a set value has not been surmounted, to return quickly and easily the movable element to the position in which there is no outflow of mixed water.

### BACKGROUND OF THE INVENTION

It is known the use of mixing cartridges in single-grip faucets to mix separate inflows of hot and cold water and, in this manner, regulate the flow-rate and temperature of the mixed water leaving the faucet.

A typical mixing cartridge comprises a cartridge body and a top element, rotatably coupled to the cartridge body, and that comprises a fulcrum and an actuation lever pivotable about said fulcrum between a forward and a backward position. Inside the cartridge body there are a fixed plate comprising openings for the separate inflow of hot and cold water and with an opening for the outflow of mixed water, and a movable element that can be displaced with respect to the fixed plate and that comprises a second plate which internally defines a mixing chamber.

In some cases, the movable element is coupled the actuation lever of the top element so that, by pivoting the actuation lever about the fulcrum, the movable element can be linearly displaced on the fixed plate increasing progressively the flow-rate of mixed water. Additionally, rotating the top element about its axis causes a rotation of the movable element on the fixed plate varying progressively the mixture of hot and cold water, and hence the temperature of the mixed water, for a given outflow rate. The mixing cartridges of this first type are usually referred to as direct-movement mixing cartridges.

Alternatively, there are some other mixing cartridges in which the movable element is rotatably coupled to an end of the actuation lever and at the same time slidably coupled to a lug provided in the internal surface of the cartridge body so that, when the actuation lever is in its forward position, a rotation of the top element about its axis does not rotate the movable element on the fixed plate. That is, the movable element remains at a first position in which there is no outflow of mixed water. However, by pivoting the actuation lever about the fulcrum towards its backward position, the movable element is displaced on the fixed plate from said first position to a second position in which there is a maximum outflow of mixed water. Said second position is dependent on the relative rotation angle of the top element with respect to the cartridge body, hence defining a locus of second positions. The mixing cartridges of this second type are usually referred to as indirect-movement mixing cartridges. An example of a mixing cartridge of this second type is provided in document US 6,202,693 B1.

Indirect-movement mixing cartridges have the advantage that, as the movable element remains still on the fixed plate when the actuation lever is in its forward position regardless of the rotation of the top element, there is less tear and wear of the ceramic material which the fixed plate and the second plate are typically made of than there is in direct-movement mixing cartridges.

Due to their simplicity of operation, most of the time users do an inefficient use of single-grip mixing faucets. For example, it is typical to leave the handle of the faucet that is connected to the pivotable actuation lever of the mixing cartridge at its middle angular position. In such case, when the user actuates the handle, causing the actuation lever to pivot, equal parts of hot and cold water are poured from the faucet. To make things even worse, regardless of the actual outflow needs, users tend to actuate the handle of the faucet forcing the actuation lever to reach the maximum flow-rate. Such misuse results in an unnecessary energy and water spending.

In order to overcome this problem, it is known the use of flow-rate limiters in the context of direct-movement mixing cartridges in which the outflow rate of the mixed water can be limited to a set value.

For example, document ES 1 044 966 U discloses a direct-movement mixing cartridge with a flow-rate limiter that comprises a spring-loaded pin provided in the movable element and that protrudes from a surface of the movable element towards the top element and a recess provided in the top element. The spring-loaded pin latches onto said recess when the movable element reaches an intermediate position, at which the flow-rate is limited to a predetermined value. In such mixing cartridge, the movable element can be displaced beyond said intermediate position against the action of the spring-loaded pin.

However, this solution has the drawback that, once the spring-loaded pin has latched onto the recess, if the user wants to return the movable element to the position on which there is no outflow of mixed water, then that displacement also has to be done against the action of the spring-loaded pin. Therefore, despite the fact that the mixing cartridge disclosed therein is designed to save water, the user might in fact spoil water due to the difficulty in closing the mixing faucet.

Also, document WO 02/093054 describes another example of a direct-movement mixing cartridge with flow-rate limiter, in which a surmountable limitation in the displacement of the movable plate of the mixing cartridge is obtained by means of a number of permanent magnets arranged on opposing surfaces of the top element and the movable element.

Despite not being fully satisfactory, the known solutions provide some flow-rate limitation to direct-movement mixing cartridges. However, it is not known at present a flow-rate limiter for an indirect-movement mixing cartridge.

Indeed, the known solutions are not applicable to indirect-movement mixing cartridges because these solutions rely on the fact that the displacement of the movable element on the fixed plate follows a straight line irrespective of the relative rotation angle of the top element with respect to the cartridge body, so that for example a spring-loaded pin provided in the movable element always encounters a recess provided in the top element and can latch onto it. Conversely to direct-movement mixing cartridges, in indirect-movement mixing cartridges the displacement of the movable element on the fixed plate does not follows always a straight line. In fact, said displacement is along a straight line only when the top element is at its middle rotation angle, and becomes more and more curved towards the right (or the left) as top element is rotated off said middle rotation angle.

It is therefore an object of the present invention to provide an indirect-movement mixing cartridge with flow-rate limiter able to limit efficiently the outflow rate of mixed water across the rotation range of the top element with respect to the cartridge body.

It is also an object of the present invention to provide an indirect-movement mixing cartridge with flow-rate limiter able to implement a surmountable flow-rate limitation, while having a simple structure.

It is yet another object of the present invention to provide an indirect-movement mixing cartridge with flow-rate limiter in which, when the position at which the flow-rate is limited to a set value is not surmounted, the user can quickly and easily return to the movable element to the position in which there is no outflow of mixed water.

### SUMMARY OF THE INVENTION

The objects of the present invention are solved with the indirect-movement mixing cartridge with flow-rate limiter of claim 1. Other favorable embodiments of the invention are defined in the dependent claims.

The present invention relates to an indirect-movement mixing cartridge with flow-rate limiter that comprises:
- a cartridge body;
- a top element rotatably coupled to the cartridge body, the top element comprising a fulcrum and an actuation lever pivotable about said fulcrum between a forward and a backward position;
- a fixed plate provided within the cartridge body and comprising openings for the separate inflow of hot and cold water and with an opening for the outflow of mixed water; and
- a movable element provided within the cartridge body and comprising a second plate that internally defines a mixing chamber, the movable element being rotatably coupled to an end of the actuation lever and slidably coupled to a lug provided in the internal surface of the cartridge body, so that:
   a) when the actuation lever is in its forward position, a rotation of the top element about its axis does not rotate the movable element on the fixed plate, the movable element remaining at a first position in which there is no outflow of mixed water; and
   b) by pivoting the actuation lever about the fulcrum towards its backward position, the movable element is displaced on the fixed plate from said first position to a second position in which there is a maximum outflow of mixed water, said second position being dependent on the relative rotation angle of the top element with respect to the cartridge body, hence defining a locus of second positions.

The indirect-movement mixing cartridge is characterized in that it further comprises a flow-rate limiter to limit, for each relative rotation angle of the top element with respect to the cartridge body, the displacement of the movable element to an intermediate position located between said first position and a second position of said locus of second positions, hence defining a locus of intermediate positions in which the outflow of mixed water is limited to a set value, while the movable element can be displaced beyond the intermediate positions of said locus of intermediate positions against the action of the flow-rate limiter; in that the flow-rate limiter comprises a spring-loaded member provided in the movable element and that protrudes from a surface of the movable element towards the top element and a fixed member provided in the top element, wherein the fixed member interferes with the spring-loaded member when the movable element reaches an intermediate position of said locus of intermediate positions; and in that the spring-loaded member and/or the fixed member comprise an arcuate portion in a plane perpendicular to the axis of rotation of the top element.

By providing an arcuate portion in at least one of the spring-loaded member and the fixed member in the plane perpendicular to the axis of rotation of the top element, it is possible to ensure that the spring-loaded member will interfere with the fixed member of the top element throughout the rotation range of said top element with respect to the cartridge body.

Moreover, despite the more sophisticated movement of the movable element with respect to the fixed plate, the flow-rate limiter for the indirect-movement mixing cartridge is not more complex and does not require a larger number of components than those flow-rate limiters available for direct-movement mixing cartridges.

Preferably, the arcuate portion defines a circular arc. More preferably, the center of said circular arc is located on the axis of rotation of the top element. In this way, the outflow rate of mixed water is limited to a same set value across the entire rotation range of the top element with respect to the cartridge body.

Optionally, said circular arc spans an angle between 70 and 200 degrees, such as 80, 90, 100, 120, 140, 160 or 180 degrees. Such an angular span makes it possible to ensure an interference with the fixed member of the flow-rate limiter across the entire rotation range of the top element.

Preferably, the fixed member protrudes from a surface of the top element towards the movable element.

By having an interference between two protruding members when the movable element reaches an intermediate position of the locus of intermediate positions, the outflow rate of mixed water can be advantageously limited to a set value, while at the same time it is avoided that the spring-loaded member latches onto that intermediate position. In this manner, if the user wants to return the movable element to the first position (in which there is no outflow of mixed water), it is not required to overcome the action of the spring-loaded member. Thus, the user can quickly and easily close the mixing faucet.

More preferably, the movable element comprises a plate cover affixed to the second plate, and the spring-loaded member is provided on said plate cover.

The plate cover may advantageously be made of an inexpensive material, such as plastic, in which the spring-loaded member can be easily integrated. In this way, it is not necessary to modify the geometry of the second plate, which is typically made of a ceramic material, to accommodate the spring-loaded member. This allows, in turn, using the same ceramic plates as the ones used in indirect-movement mixing cartridges without flow-rate limiter, or to swap among different ceramic plates (each for example defining a mixing chamber with different geometry) easily without having to disassemble and reassemble the flow-rate limiter, and regardless of the specific geometry of the spring-loaded member.

In a first group of embodiments, the fixed member comprises a spherical element secured in a socket provided in the top element. Such geometry of the fixed member is advantageous as it has a very small footprint and is particularly suitable for top elements in which there is little space available for the integration of the fixed member.

Preferably, in said first group of embodiments, the spring-loaded member is arranged in a groove provided in the plate cover, and the spring-loaded member comprises:
- a U-shaped piece with a central arcuate portion and two lateral portions, each lateral portion having an end connected to the central arcuate portion and an open end; and
- a resilient element disposed between the U-shaped piece and the bottom of the groove of the plate cover.

The central arcuate portion of the U-shaped piece interferes with the spherical element of the fixed member when the movable element reaches an intermediate position of the locus of intermediate positions, limiting the displacement of the movable element.

If the user actuates the actuation lever further towards the backward position, the force exerted by the spherical element against the spring-loaded member keeps increasing until the resilient element is finally compressed, allowing the central arcuate portion of the U-shaped piece to flex towards the bottom of the groove so that it can pass beneath the spherical element, allowing the movable element to continue its displacement towards a second position of the locus of second positions. Once the limitation has been surmounted, the resilient element returns to its uncompressed state and the U-shaped piece recovers its position.

More preferably, the U-shaped piece comprises a retention means provided at each open end of the lateral portions, the retention means being adapted to affix the U-shaped piece to the plate cover.

The retention means not only keep the U-shaped piece and the resilient member in place, but also hold the U-shaped piece firmly when its arcuate portion flexes under the interference force exerted by the spherical element of the fixed member.

Optionally, the resilient element is a toroidal elastic joint. Said toroidal elastic joint may preferably be made of rubber.

Such a geometry for the resilient element is advantageous as it provides a uniform elastic resistance across the entire rotation range of the top element, in addition to acting as a support for the U-shaped piece.

In a second group of embodiments, the fixed member comprises an arcuate element retained in a groove provided on the top element. Such geometry of the fixed member is particularly advantageous in those cases in which there is little space available for the integration of a large spring-loaded member in the plate cover of the movable element.

Preferably, in said second group of embodiments, the spring-loaded member comprises:
- a spherical element placed in a cavity of the plate cover, the cavity having an opening on the surface of the plate cover; and
- a resilient element arranged between the spherical element and the bottom of said cavity.

In this manner the spring-loaded member has a reduced footprint on the plate cover of the movable element, with only the spherical element of the spring-loaded member protruding from said cavity of plate cover.

The spherical element interferes with the arcuate element of the fixed member when the movable element reaches an intermediate position of the locus of intermediate positions, limiting the displacement of the movable element.

If the user continues actuating the actuation lever further towards the backward position, the force exerted by the arcuate element against the spring-loaded member keeps increasing until the resilient element finally flexes, allowing the spherical element to move downwards towards the bottom of the cavity so that it can pass beneath the arcuate element of the fixed member, allowing the movable element to surmount the limitation. Once the limitation has been surmounted, the resilient element returns to its original state and the spherical element returns to its position.

More preferably, in said second group of embodiments, the resilient element is a flexible beam disposed parallel to the surface of the movable element from which the spring-loaded member protrudes.

The use of a flexible beam is advantageous to increase the elastic resistance of the resilient element and require a larger force to be exerted by the fixed member in order to flex.

The flexible beam may be integrally made of metal, preferably, stainless steel. This increases even further the elastic resistance of the resilient element, thus requiring the user to actuate the actuation lever with more force in order to surmount the limitation in the outflow of mixed water.

Optionally, in said second group of embodiments, the plate cover comprises a retaining lid configured to close the opening of the cavity and provided with a hole through which the spherical element protrudes when the retaining lid is placed on the cavity.

The cover plate keeps the spherical element and the resilient element in place and acts as a stop for the spherical element, which protrudes through the hole in the retaining lid by the action of the biasing force of the resilient element.

### BRIEF DESCRIPTION OF THE FIGURES

In the following some preferred embodiments of the invention will be described with reference to the enclosed figures. They are provided only for illustration purposes without however limiting the scope of the invention.
Figure 1 shows a perspective exploded view of an indirect-movement mixing cartridge with flow-rate limiter according to a first embodiment of the present invention.
Figure 2 is a simplified view of the exploded view of the embodiment of figure 1 in which only those parts of the mixing cartridge related to the flow-rate limiter have been depicted.
Figure 3 corresponds to a cross-sectional view of the embodiment of figure 1 along a plane parallel to the axis of rotation of the top element of the mixing cartridge and which divides the mixing cartridge into two essentially symmetrical halves.
Figure 4 depicts a perspective exploded view of an indirect-movement mixing cartridge with flow-rate limiter according to a second embodiment of the present invention.
Figure 5 corresponds to a cross-sectional view of the embodiment of figure 4 along a plane parallel to the axis of rotation of the top element of the mixing cartridge and which divides the mixing cartridge into two essentially symmetrical halves.

### DESCRIPTION OF THE PREFERRED EMBODIMENTS

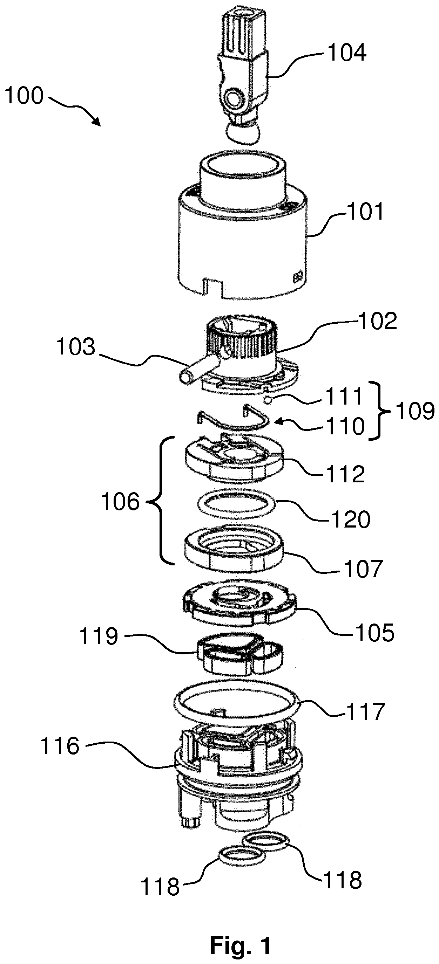

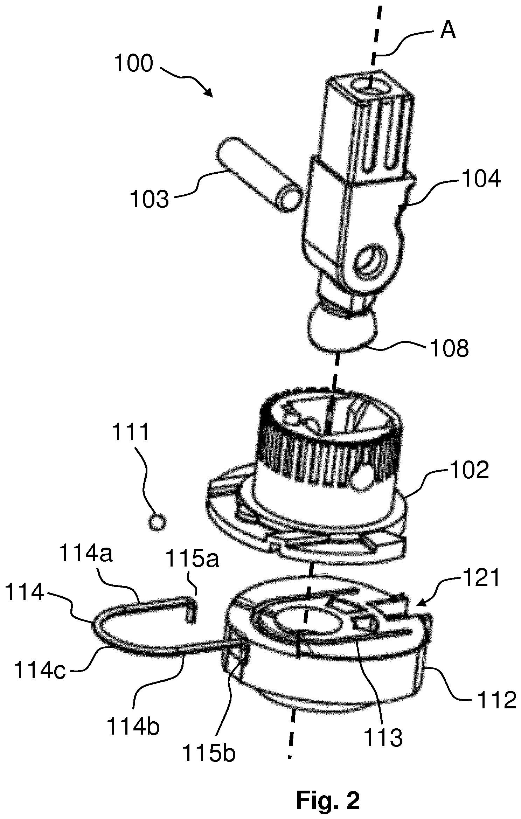

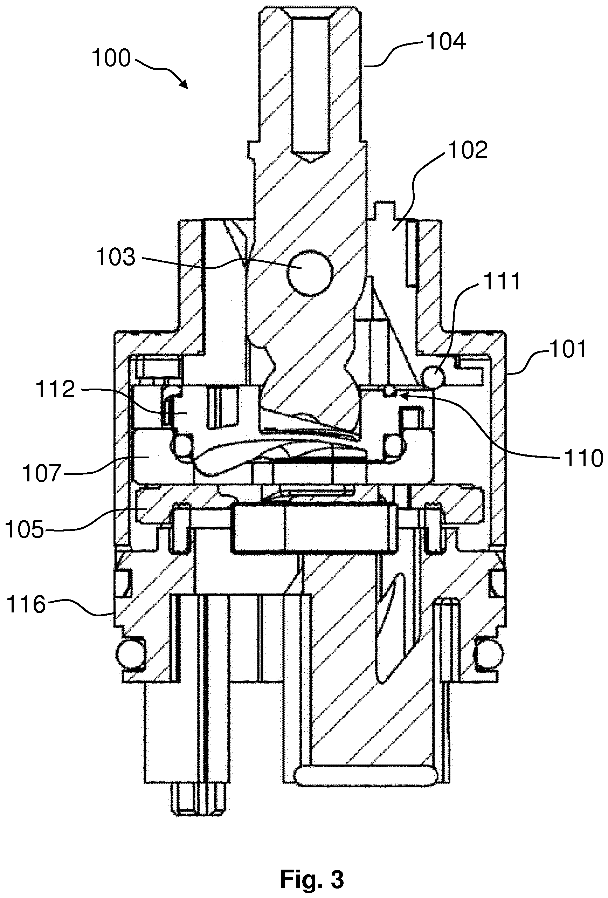

In figures 1-3 it is illustrated a first embodiment of an indirect-movement mixing cartridge with flow-rate limiter in accordance with the present invention. In particular, the indirect-movement mixing cartridge 100 comprises a cartridge body 101 and a top element 102 rotatably coupled to the cartridge body. The top element 102 comprises a fulcrum 103 and an actuation lever 104 pivotable about said fulcrum between a forward and a backward position.

The mixing cartridge 100 also comprises a fixed plate 105 and a movable element 106, both being provided within the cartridge body 101. The fixed plate 105 comprises openings for the separate inflow of hot and cold water and an opening for the outflow of mixed water. On the other hand, the movable element 106 comprises a second plate 107 that internally defines a mixing chamber and a plate cover 112 affixed to the second plate 107. As depicted in figure 1, a toroidal joint 120 is disposed between the second plate 107 and the plate cover 112 to ensure water tightness.

It can be also seen in figure 1 that the mixing cartridge 100 comprises a base element 116 associated with the cartridge body 101. A toroidal joint 117 ensures that the union of the base element 116 to the cartridge body 101 is watertight. The base element 116 lies underneath the fixed plate 105 and comprises water flow openings corresponding to those present in the fixed plate 105, and connected to the latter by means of an inner outlet seal 119. Finally, respective toroidal joints 118 ensure a proper connection of the water flow openings of the base element 116 with water supply pipes.

The movable element 106 is rotatably coupled to an end 108 of the actuation lever 104 and slidably coupled to a lug (not visible in the figures) provided in the internal surface of the cartridge body 101. Said lug engages a recess 121 provided in the plate cover 112 of the movable element 106 when the actuation lever 104 is its forward position. In this manner, when the actuation lever 104 is in its forward position, a rotation of the top element 102 about its axis A does not rotate the movable element 106 on the fixed plate 105 (i.e., the movable element remains at a first position in which there is no outflow of mixed water). However, by pivoting the actuation lever 104 about the fulcrum 103 towards its backward position, the movable element 106 is displaced on the fixed plate 105 from said first position to a second position in which there is a maximum outflow of mixed water. Such displacement disengages said lug from the recess 121. Since said second position is dependent on the relative rotation angle of the top element 102 with respect to the cartridge body 101, a locus of second positions is defined.

The indirect-movement mixing cartridge 100 further includes a flow-rate limiter 109 that comprises a spring-loaded member 110, being provided on the plate cover 112 of the movable element 106 and protruding from a surface of the plate cover towards the top element 102, and a fixed member, being provided in the top element 102 and protruding from a surface of the top element towards the movable element 106.

The fixed member comprises a spherical element 111 secured in a socket provided in the top element 102. On the other hand, the spring-loaded member 110 is arranged in a groove 113 provided in the plate cover 112 and comprises a U-shaped piece 114 disposed in a plane perpendicular to the axis A of rotation of the top element 102.

The U-shaped piece 114 has a central arcuate portion 114c that defines a circular arc with its center being located on the axis A of rotation of the top element 102 and spanning an angle of approximately 100 degrees. Moreover, said U-shaped piece 114 also comprises two lateral portions 114a, 114b, each of them having an end connected to the central arcuate portion 114c and an open end. In addition, the U-shaped piece 114 comprises a retention means 115a, 115b provided at each open end of the lateral portions 114a, 114b. The retention means 115a, 115b are adapted to affix the U-shaped piece 114 to the plate cover 112.

The spring-loaded member 110 also includes a resilient element (not depicted in the figures) disposed between the U-shaped piece 114 and the bottom of the groove 113 of the plate cover 112. In this particular embodiment, the resilient element is a toroidal elastic joint made of rubber.

For each relative rotation angle of the top element 102 with respect to the cartridge body 101, the central arcuate portion 114c of the U-shaped piece 114 interferes with the spherical element 111 when the movable element 106 reaches an intermediate position, being located between said first position and a second position of the locus of second positions, at which the outflow rate of mixed water is limited. However, this limitation is surmountable against the action of the spring-loaded member 110 of the flow-rate limiter 109.

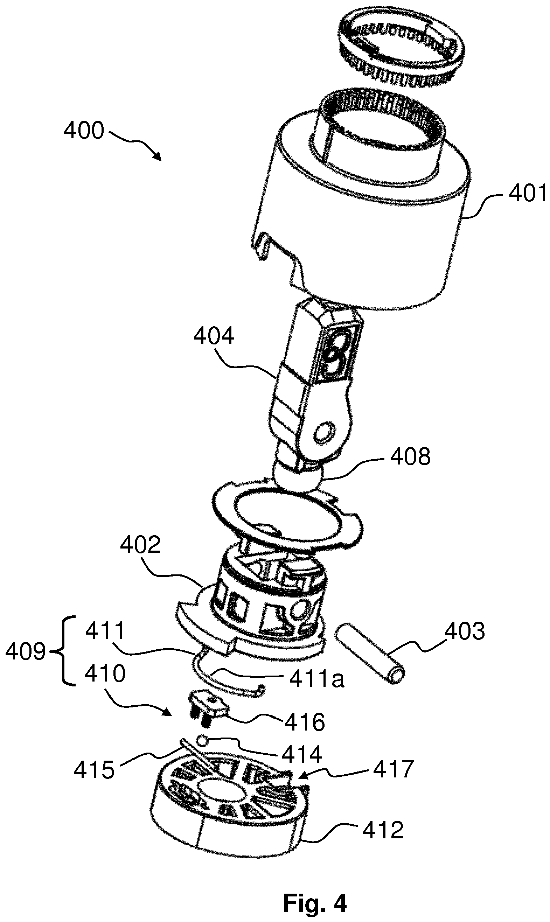

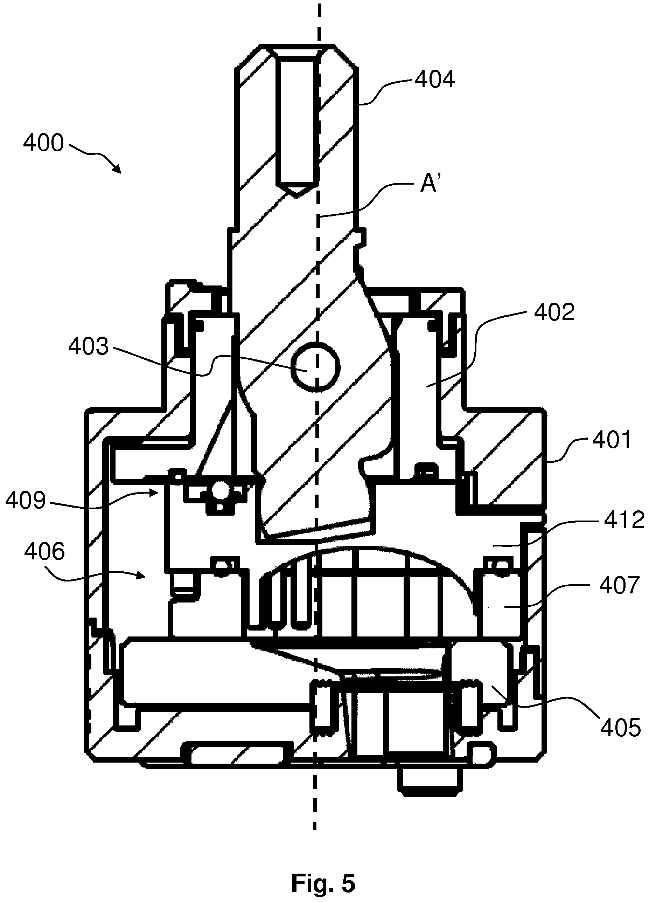

Referring now to figures 4 and 5, it is there represented a second embodiment of the indirect-movement mixing cartridge with flow-rate limiter according to the present invention. Similarly to the previous example, the indirect-movement mixing cartridge 400 comprises a cartridge body 401 and a top element 402 rotatably coupled thereto, which includes a fulcrum 403 and an actuation lever 404 pivotable about said fulcrum between a forward and a backward position.

Provided within the cartridge body 401, there are a fixed plate 405 and a movable element 406 (see figure 5). The movable element 406 comprises a second plate 407 that internally defines a mixing chamber and a plate cover 412 affixed to the second plate 407. The movable element 406 is rotatably coupled to an end 408 of the actuation lever 404 and slidably coupled by means of a recess 417 to a lug (not visible in figures 4 and 5) provided in the internal surface of the cartridge body 401, which allows the movable element 406 to be displaced on the fixed plate 405 in the same manner as described above in the context of the example illustrated in figures 1-3.

The indirect-movement mixing cartridge 400 has also a flow-rate limiter 409 that comprises a spring-loaded member 410, being provided on the plate cover 412 of the movable element 406 and protruding from a surface of the plate cover towards the top element 402, and a fixed member, being provided in the top element 402 and protruding from a surface of the top element towards the movable element 406.

Alternatively to the previous example described above, in this second embodiment the spring-loaded member 410 comprises a spherical element 414 placed in a cavity of the plate cover 412, the cavity having an opening on the surface of the plate cover, and a resilient element arranged between the spherical element 414 and the bottom of said cavity. In particular, the resilient element is a flexible beam 415 integrally made of metal and disposed parallel to the surface of the movable element 406 from which the spring-loaded member 410 protrudes.

The fixed member comprises an arcuate element 411 retained in a groove provided on the top element 402. Said fixed member comprises, in a plane perpendicular to the axis A' of rotation of said top element, an arcuate portion 411a that defines a circular arc having its center located on said axis A' and spanning an angle of approximately 100 degrees.

In this manner, the spherical element 414 interferes with the arcuate element 411 when the movable element 406 reaches an intermediate position of the locus of intermediate positions, hence providing a surmountable limitation to the displacement of the movable element 406.

Finally, the plate cover 412 further comprises a retaining lid 416 configured to close the opening of the cavity. Said retaining lid 416 is provided with a hole through which the spherical element 414 protrudes when the retaining lid 416 is placed on the cavity.

While the invention has been described with respect to some specific examples, including presently preferred modes of carrying out the invention, those skilled in the art will appreciate that there are numerous variations and permutations of the above described mixing cartridge, including substitution of specific elements by others technically equivalent, without departing from the scope of the invention as set forth in the appended claims.

## Claims

1. Indirect-movement mixing cartridge (100, 400) with flow-rate limiter, comprising:
- a cartridge body (101, 401);
- a top element (102, 402) rotatably coupled to the cartridge body, the top element comprising a fulcrum (103, 403) and an actuation lever (104, 404) pivotable about said fulcrum between a forward and a backward position;
- a fixed plate (105, 405) provided within the cartridge body and comprising openings for the separate inflow of hot and cold water and with an opening for the outflow of mixed water; and
- a movable element (106, 406) provided within the cartridge body and comprising a second plate (107, 407) that internally defines a mixing chamber, the movable element being rotatably coupled to an end (108, 408) of the actuation lever (104, 404) and slidably coupled to a lug provided in the internal surface of the cartridge body, so that:
a) when the actuation lever (104, 404) is in its forward position, a rotation of the top element (102, 402) about its axis (A, A') does not rotate the movable element (106, 406) on the fixed plate (105, 405), the movable element remaining at a first position in which there is no outflow of mixed water; and
b) by pivoting the actuation lever (104, 404) about the fulcrum (103, 403) towards its backward position, the movable element (106, 406) is displaced on the fixed plate (105, 405) from said first position to a second position in which there is a maximum outflow of mixed water, said second position being dependent on the relative rotation angle of the top element with respect to the cartridge body, hence defining a locus of second positions;
**characterized in that** the indirect-movement mixing cartridge (100, 400) further comprises a flow-rate limiter (109, 409) to limit, for each relative rotation angle of the top element (102, 402) with respect to the cartridge body (101, 401), the displacement of the movable element (106, 406) to an intermediate position located between said first position and a second position of said locus of second positions, hence defining a locus of intermediate positions in which the outflow of mixed water is limited to a set value, while the movable element (106, 406) can be displaced beyond the intermediate positions of said locus of intermediate positions against the action of the flow-rate limiter (109, 409);
**in that** the flow-rate limiter (109, 409) comprises a spring-loaded member (110, 410) provided in the movable element (106, 406) and **in that** the spring-loaded member (110, 410) protrudes from a surface of the movable element (106, 406) towards the top element (102, 402) and a fixed member (111, 411) is provided in the top element (102, 402), wherein
the fixed member (111, 411) interferes with the spring-loaded member (110, 410) when the movable element (106, 406) reaches an intermediate position of said locus of intermediate positions; and
**in that** the spring-loaded member (110, 410) and/or the fixed member (111, 411) comprise an arcuate portion (114c, 411a) in a plane perpendicular to the axis (F, F') of rotation of the top element.

2. The indirect-movement mixing cartridge according to claim 1, wherein the arcuate portion (114c) defines a circular arc.

3. The indirect-movement mixing cartridge according to claim 2, wherein the center of said circular arc is located on the axis (A, A') of rotation of the top element.

4. The indirect-movement mixing cartridge according to claim 2 or 3, wherein said circular arc spans an angle between 70 and 200 degrees.

5. The indirect-movement mixing cartridge according to any of claims 1 to 4, wherein the fixed member (111, 411) protrudes from a surface of the top element (102, 402) towards the movable element (106, 406).

6. The indirect-movement mixing cartridge according to claim 5, wherein the movable element (106, 406) comprises a plate cover (112, 412) affixed to the second plate (107, 407), and wherein the spring-loaded member (110, 410) is provided on said plate cover.

7. The indirect-movement mixing cartridge according to claim 6, wherein the fixed member comprises a spherical element (111) secured in a socket provided in the top element.

8. The indirect-movement mixing cartridge according to claim 7, wherein the spring-loaded member (110) is arranged in a groove (113) provided in the plate cover (112), and wherein the spring-loaded member (110) comprises:
- a U-shaped piece (114) with a central arcuate portion (114c) and two lateral portions (114a, 114b), each lateral portion having an end connected to the central arcuate portion and an open end; and
- a resilient element disposed between the U-shaped piece (114) and the bottom of the groove (113) of the plate cover.

9. The indirect-movement mixing cartridge according to claim 8, wherein the U-shaped piece (114) comprises a retention means (115a, 115b) provided at each open end of the lateral portions (114a, 114b), the retention means being adapted to affix the U-shaped piece (114) to the plate cover (112).

10. The indirect-movement mixing cartridge according to claim 8 or 9, wherein the resilient element is a toroidal elastic joint, said toroidal elastic joint being preferably made of rubber.

11. The indirect-movement mixing cartridge according to claim 6, wherein the fixed member comprises an arcuate element (411) retained in a groove provided on the top element (402).

12. The indirect-movement mixing cartridge according to claim 11, wherein the spring-loaded member (410) comprises:
- a spherical element (414) placed in a cavity of the plate cover (412), the cavity having an opening on the surface of the plate cover; and
- a resilient element (415) arranged between the spherical element (414) and the bottom of said cavity.

13. The indirect-movement mixing cartridge according to claim 12, wherein the resilient element is a flexible beam (415) disposed parallel to the surface of the movable element (406) from which the spring-loaded member (410) protrudes.

14. The indirect-movement mixing cartridge according to claim 13, wherein the flexible beam (415) is integrally made of metal.

15. The indirect-movement mixing cartridge according to any of claims 12 to 14, wherein the plate cover (412) comprises a retaining lid (416) configured to close the opening of the cavity and provided with a hole through which the spherical element (414) protrudes when the retaining lid (416) is placed on the cavity.

## Patentansprüche

1. Indirekte-Bewegung-Mischkassette (100, 400) mit Flussratenbegrenzer, die folgende Merkmale aufweist:
einen Kassettenkörper (101, 401);
ein oberes Element (102, 402), das drehbar mit dem Kassettenkörper gekoppelt ist, wobei das obere Element einen Drehpunkt (103, 403) und einen Betätigungshebel (104, 404) umfasst, der um den Drehpunkt zwischen einer Vorwärts- und einer Rückwärtsposition schwenkbar ist;
eine feste Platte (105, 405), die in dem Kassettenkörper vorgesehen ist und Öffnungen aufweist für den getrennten Zulauf von heißem und kaltem Wasser und mit einer Öffnung für den Ablauf von gemischtem Wasser; und
ein bewegbares Element (106, 406), das in dem Kassettenkörper vorgesehen ist und eine zweite Platte (107, 407) aufweist, die intern eine Mischkammer definiert, wobei das bewegbare Element drehbar mit einem Ende (108, 408) des Betätigungshebels (104, 404) gekoppelt ist und gleitbar mit einem Vorsprung gekoppelt ist, der in der Innenoberfläche des Kassettenkörpers vorgesehen ist, so dass:
a) wenn der Betätigungshebel (104, 404) in seiner Vorwärtsposition ist, eine Drehung des oberen Elements (102, 402) um seine Achse (A, A') das drehbare Element (106, 406) auf der festen Platte (105, 405) nicht dreht, wobei das bewegbare Element an einer ersten Position bleibt, in der kein Ablauf von gemischtem Wasser stattfindet; und
b) durch Schwenken des Betätigungshebels (104, 404) um den Drehpunkt (103, 403) zu seiner Rückwärtsposition das bewegbare Element (106, 406) auf der festen Platte (105, 405) von der ersten Position zu einer zweiten Position verschoben wird, bei der es einen maximalen Ablauf von gemischtem Wasser gibt, wobei die zweite Position von dem relativen Drehwinkel des oberen Elements bezüglich des Kassettenkörpers abhängt und somit einen Ort der zweiten Positionen definiert;
**dadurch gekennzeichnet, dass** die Indirekte-Bewegung-Mischkassette (100, 400) ferner einen Flussratenbegrenzer (109, 409) aufweist zum Begrenzen, für jeden relativen Drehwinkel des oberen Elements (102, 402) in Bezug auf den Kassettenkörper (101, 401), die Verschiebung des bewegbaren Elements (106, 406) zu einer Zwischenposition, die sich zwischen der ersten Position und einer zweiten Position des Orts der zweiten Positionen befindet, womit ein Ort von Zwischenpositionen definiert wird, bei dem der Ablauf von gemischtem Wasser auf einen Sollwert begrenzt ist, während das bewegbare Element (106, 406) gegen die Aktion des Flussratenbegrenzers (109, 409) über die Zwischenpositionen des Orts der Zwischenpositionen hinaus verschoben werden kann;
dass der Flussratenbegrenzer (109, 409) ein federgespanntes Bauglied (110, 410) aufweist, das in dem bewegbaren Element (106, 406) vorgesehen ist und
dass das federgespannte Bauglied (110, 410) von einer Oberfläche des bewegbaren Elements (106, 406) zu dem oberen Element (102, 402) vorsteht und ein festes Bauglied (111, 411) in dem oberen Element (102, 402) vorgesehen ist, wobei das feste Bauglied (111, 411) das federgespannte Bauglied (110, 410) stört, wenn das bewegbare Element (106, 406) eine Zwischenposition des Orts von Zwischenpositionen erreicht; und
dass das federgespannte Bauglied (110, 410) und/oder das feste Bauglied (111, 411) einen bogenförmigen Abschnitt (114c, 411a) in einer Ebene senkrecht zu der Achse (F, F') der Drehung des oberen Elements aufweist.

2. Die Indirekte-Bewegung-Mischkassette gemäß Anspruch 1, bei der der bogenförmige Abschnitt (114c) einen kreisförmigen Bogen definiert.

3. Die Indirekte-Bewegung-Mischkassette gemäß Anspruch 2, bei der sich die Mitte des kreisförmigen Bogens auf der Achse (A') der Drehung des oberen Elements befindet.

4. Die Indirekte-Bewegung-Mischkassette gemäß Anspruch 2 oder 3, bei der der kreisförmige Bogen einen Winkel zwischen 70 und 200 Grad umspannt.

5. Die Indirekte-Bewegung-Mischkassette gemäß einem der Ansprüche 1 bis 4, bei der das feste Bauglied (111, 411) von einer Oberfläche des oberen Elements (102, 402) zu dem bewegbaren Element (106, 406) hin vorsteht.

6. Die Indirekte-Bewegung-Mischkassette gemäß Anspruch 5, bei der das bewegbare Element (106, 406) eine Plattenabdeckung (112, 412) aufweist, die an der zweiten Platte (107, 407) fixiert ist und wobei das federgespannte Bauglied (110, 410) auf der Plattenabdeckung vorgesehen ist.

7. Die Indirekte-Bewegung-Mischkassette gemäß Anspruch 6, bei der das feste Bauglied ein kugelförmiges Element (111) aufweist, das in einem Sockel gesichert ist, der in dem oberen Element vorgesehen ist.

8. Die Indirekte-Bewegung-Mischkassette gemäß Anspruch 7, bei der das federgespannte Bauglied (110) in einer Rille (113) angeordnet ist, die in der Plattenabdeckung (112) vorgesehen ist, und wobei das federgespannte Bauglied (110) folgende Merkmale aufweist:
- ein U-förmiges Stück (114) mit einem mittleren bogenförmigen Abschnitt (114c) und zwei seitlichen Abschnitten (114a, 114b), wobei jeder seitliche Abschnitt ein Ende, das mit dem mittleren bogenförmigen Abschnitt verbunden ist, und ein offenes Ende aufweist; und
- ein nachgiebiges Element, das zwischen dem U-förmigen Stück (114) und der Unterseite der Rille (113) der Plattenabdeckung angeordnet ist.

9. Die Indirekte-Bewegung-Mischkassette gemäß Anspruch 8, bei der das U-förmige Stück (114) eine Halteeinrichtung (115a, 115b) aufweist, die an jedem offenen Ende der seitlichen Abschnitte (114a, 114b) vorgesehen ist, wobei die Halteeinrichtung angepasst ist, um das U-förmige Stück (114) an der Plattenabdeckung (112) zu fixieren.

10. Die Indirekte-Bewegung-Mischkassette gemäß Anspruch 8 oder 9, bei der das nachgiebige Element ein ringförmiges elastisches Gelenk ist, wobei das ringförmige elastische Gelenk vorzugsweise aus Gummi hergestellt ist.

11. Die Indirekte-Bewegung-Mischkassette gemäß Anspruch 6, bei der das feste Bauglied ein bogenförmiges Element (411) aufweist, das in einer Rille gehalten wird, die auf dem oberen Element (402) vorgesehen ist.

12. Die Indirekte-Bewegung-Mischkassette gemäß Anspruch 11, bei der das federgespannte Bauglied (410) folgende Merkmale aufweist:
ein kugelförmiges Element (414), das in einem Hohlraum der Plattenabdeckung (412) platziert ist, wobei der Hohlraum eine Öffnung auf der Oberfläche der Plattenabdeckung aufweist; und
ein nachgiebiges Element (415), das zwischen dem kugelförmigen Element (414) und der Unterseite des Hohlraums angeordnet ist.

13. Die Indirekte-Bewegung-Mischkassette gemäß Anspruch 12, bei der das nachgiebige Element ein flexibler Balken (415) ist, der parallel zu der Oberfläche des bewegbaren Elements (406) angeordnet ist, von der das federgespannte Bauglied (410) vorsteht.

14. Die Indirekte-Bewegung-Mischkassette gemäß Anspruch 13, bei der der flexible Balken (415) einstückig aus Metall hergestellt ist.

15. Die Indirekte-Bewegung-Mischkassette gemäß einem der Ansprüche 12 bis 14, bei der die Plattenabdeckung (412) einen Haltedeckel (416) aufweist, der konfiguriert ist, um die Öffnung des Hohlraums zu schließen und mit einem Loch versehen ist, durch das das kugelförmige Element (414) vorsteht, wenn der Haltedeckel (416) auf dem Hohlraum platziert ist.

## Revendications

1. cartouche mélangeuse à mouvement indirect (100, 400) avec limiteur de débit, comprenant :
- un corps de cartouche (101, 401) ;
- un élément supérieur (102, 402) couplé de manière rotative au corps de cartouche, l'élément supérieur comprenant un pivot (103, 403) et un levier d'activation (104, 404) pivotant autour dudit pivot entre une position avant et une position arrière ;
- une plaque fixe (105, 405) située au sein du corps de cartouche et comprenant des ouvertures pour une arrivée séparée d'eau chaude et d'eau froide ainsi qu'une ouverture pour la sortie d'eau mélangée ; et
- un élément mobile (106, 406) situé au sein du corps de cartouche et comprenant une seconde plaque (107, 407) définissant en interne une chambre de mélange, l'élément mobile étant couplé de manière rotative à une extrémité (108, 408) du levier d'activation (104, 404) et couplé de manière coulissante à un ergot situé sur la surface interne du corps de cartouche, afin que :
a) lorsque le levier d'activation (104, 404) se trouve dans sa position avancée, une rotation de l'élément supérieur (102, 402) autour de son axe (A, A') ne fasse pas entrer en rotation l'élément mobile (106, 406) sur la plaque fixe (105, 405), l'élément mobile restant dans une première position dans laquelle il n'y a aucune sortie d'eau mélangée ; et
b) en pivotant le levier d'activation (104, 404) autour du pivot (103, 403) vers sa position arrière, l'élément mobile (106, 406) est déplacé sur la plaque fixe (105, 405) de ladite première position vers une seconde position dans laquelle le débit de sortie d'eau mélangée est maximal, ladite seconde position dépendant de l'angle relatif de rotation de l'élément supérieur par rapport au corps de cartouche, définissant ainsi un emplacement pour les secondes positions ;
**caractérisé en ce que** la cartouche mélangeuse à mouvement indirect (100, 400) comprend en outre un limiteur de débit (109, 409) pour limiter, pour chaque angle relatif de rotation de l'élément supérieur (102, 402) par rapport au corps de cartouche (101, 401), le déplacement de l'élément mobile (106, 406) vers une position intermédiaire située entre ladite première position et une seconde position dudit emplacement des secondes positions, définissant ainsi un emplacement de positions intermédiaires dans lequel la sortie de l'eau mélangée est limitée à une valeur prédéfinie, tandis que l'élément mobile (106, 406) peut être déplacé au-delà des positions intermédiaires dudit emplacement de positions intermédiaires contre l'action du limiteur de débit (109, 409) ;
**en ce que** le limiteur de débit (109, 409) comprend un élément armé par un ressort (110, 410) situé sur l'élément mobile (106, 406) et **en ce que** l'élément armé par un ressort (110, 410) dépasse d'une surface de l'élément mobile (106, 406) vers l'élément supérieur (102, 402) et un élément fixe (111, 411) est situé dans l'élément supérieur (102, 402), dans lequel l'élément fixe (111, 411) interfère avec l'élément armé par un ressort (110, 410) lorsque l'élément mobile (106, 406) atteint une position intermédiaire dudit emplacement de positions intermédiaires ; et
**en ce que** l'élément armé par un ressort (110, 410) et/ou l'élément fixe (111, 411) comprennent/comprend une portion arquée (114c, 411a) sur un plan perpendiculaire à l'axe de rotation (F, F') de l'élément supérieur.

2. Cartouche mélangeuse à mouvement indirect selon la revendication 1, dans laquelle la portion arquée (114c) définit un arc de cercle.

3. Cartouche mélangeuse à mouvement indirect selon la revendication 2, dans laquelle le centre dudit arc de cercle est situé sur l'axe **(A, A')** de rotation de l'élément supérieur.

4. Cartouche mélangeuse à mouvement indirect selon la revendication 2 ou 3, dans laquelle ledit arc de cercle couvre un angle compris entre 70 et 200 degrés.

5. Cartouche mélangeuse à mouvement indirect selon une quelconque des revendications 1 à 4, dans laquelle l'élément fixe (111, 411) dépasse d'une surface de l'élément supérieur (102, 402) vers l'élément mobile (106, 406).

6. Cartouche mélangeuse à mouvement indirect selon la revendication 5, dans laquelle l'élément mobile (106, 406) comprend un couvercle de plaque (112, 412) apposé sur la seconde plaque (107, 407), et dans laquelle l'élément armé par un ressort (110, 410) est situé sur ledit couvercle de plaque.

7. Cartouche mélangeuse à mouvement indirect selon la revendication 6, dans laquelle l'élément fixe comprend un élément sphérique (111) fixé dans une cavité située dans l'élément supérieur.

8. Cartouche mélangeuse à mouvement indirect selon la revendication 7, dans laquelle l'élément armé par un ressort (110) est disposé dans une rainure (113) située sur le couvercle de plaque (112), et dans laquelle l'élément armé par un ressort (110) comprend :
- une pièce en forme de U (114) avec une portion centrale arquée (114c) et deux portions latérales (114a, 114b), chaque portion latérale ayant une extrémité connectée à la portion centrale arquée et une extrémité ouverte ; et
- un élément résilient disposé entre la pièce en forme de U (114) et le fond de la rainure (113) du couvercle de plaque.

9. Cartouche mélangeuse à mouvement indirect selon la revendication 8, dans laquelle la pièce en forme de U (114) comprend des moyens de rétention (115a, 115b) situés à chaque extrémité ouverte des portions latérales (114a, 114b), les moyens de rétention étant adaptés pour apposer la pièce en forme de U (114) au couvercle de plaque (112).

10. Cartouche mélangeuse à mouvement indirect selon la revendication 8 ou 9, dans laquelle l'élément résilient est un joint torique élastique, ledit joint torique élastique étant préférablement fabriqué en caoutchouc.

11. Cartouche mélangeuse à mouvement indirect selon la revendication 6, dans laquelle l'élément fixe comprend un élément arqué (411) retenu dans une rainure située sur l'élément supérieur (402).

12. Cartouche mélangeuse à mouvement indirect selon la revendication 11, dans laquelle l'élément armé par un ressort (410) comprend :
- un élément sphérique (414) placé dans une cavité du couvercle de plaque (412), la cavité comportant une ouverture sur la surface du couvercle de plaque ; et
- un élément résilient (415) disposé entre l'élément sphérique (414) et le fond de ladite cavité.

13. Cartouche mélangeuse à mouvement indirect selon la revendication 12, dans laquelle l'élément résilient est une barre flexible (415) disposée parallèlement à la surface de l'élément mobile (406) duquel dépasse l'élément armé par un ressort (410).

14. Cartouche mélangeuse à mouvement indirect selon la revendication 13, dans laquelle la barre flexible (415) est entièrement fabriquée en métal.

15. Cartouche mélangeuse à mouvement indirect selon une quelconque des revendications 12 à 14, dans laquelle le couvercle de plaque (412) comprend un couvercle de rétention (416) configuré pour fermer l'ouverture de la cavité et doté d'un trou à travers lequel l'élément sphérique (414) dépasse lorsque le couvercle de rétention (416) est placé sur la cavité.
